# EUROPEAN PATENT APPLICATION

(11) **EP 4 738 954 A1**
(43) Date of publication of application: **06.05.2026**
(21) Application number: 23942823.8
(22) Date of filing: 28.06.2023
(51) Int. Cl.: H04W 72/0446

(54) **INFORMATION INDICATION METHOD, TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Gunzelmann, Rainer
(86) International application number: PCT/CN2023/103502
(87) International publication number: WO 2025/000306

(57) **Abstract**

The embodiments of the present disclosure provide an information indication method, a terminal, a network device, a system and a storage medium. The method is executed by a terminal, and comprises: receiving first information, wherein the first information is configured for indicating at least one of the following: the category of time units which can be used in executing multiple first channel transmissions, and the category of time units which can be used in executing any first channel transmission among the multiple first channel transmissions. Thus, the use of different categories of time units is clearly defined.

## Description

### FIELD

The disclosure relates to the field of communication technologies, and in particular relates to information indication methods, a terminal, a network device and a storage medium.

### BACKGROUND

In the field of communication technologies, in order to improve uplink coverage and throughput, research on subband full duplex (SBFD) has been carried out. In an SBFD scenario, there are downlink (DL) symbols, SBFD symbols, uplink (UL) symbols, and flexible (F) symbols.

### SUMMARY

After introducing different categories of time units, the use of different categories of time units is not clear.

Embodiments of the disclosure provides information indication methods, information indication apparatuses, a communication device and a storage medium.

According to a first aspect of embodiments of the disclosure, there is provided an information indication method, including:
receiving first information,
in which the first information indicates at least one of:
   a time unit category available for performing multiple times of first channel transmissions; or
   a time unit category available for performing any one of multiple times of first channel transmissions.

According to a second aspect of embodiments of the disclosure, there is provided an information indication method, including:
sending first information,
in which the first information indicates at least one of:
   a time unit category available for performing multiple times of first channel transmissions; or
   a time unit category available for performing any one of multiple times of first channel transmissions.

According to a third aspect of embodiments of the disclosure, there is provided a terminal, including:
a transceiver module, configured to receive first information,
in which the first information indicates at least one of:
   a time unit category available for performing multiple times of first channel transmissions; or
   a time unit category available for performing any one of multiple times of first channel transmissions.

According to a fourth aspect of embodiments of the disclosure, there is provided a network device, including:
a transceiver module, configured to send first information,
in which the first information indicates at least one of:
   a time unit category available for performing multiple times of first channel transmissions; or
   a time unit category available for performing any one of multiple times of first channel transmissions.

According to a fifth aspect of embodiments of the disclosure, there is provided an information indication method, including:
sending, by a network device, first information to a terminal,
in which the first information indicates at least one of:
   a time unit category available for performing multiple times of first channel transmissions; or
   a time unit category available for performing any one of the multiple times of first channel transmissions.

According to a sixth aspect of embodiments of the disclosure, there is provided a communication system, including: a terminal, configured to implement the information indication method according to the first aspect; and a network device, configured to implement the information indication method according to the second aspect.

According to a seventh aspect of embodiments of the disclosure, there is provided a terminal, including:
one or more processors,
in which the terminal is configured to perform the information indication method according to the first aspect.

According to an eighth aspect of embodiments of the disclosure, there is provided a network device, including:
one or more processors,
in which the network device is configured to perform the information indication method according to the second aspect.

According to a ninth aspect of embodiments of the disclosure, there is provided a storage medium having stored therein instructions that, when executed on a communication device, cause the communication device to perform the information indication method according to the first aspect, the second aspect, or the fifth aspect.

The technical solutions according to embodiments of the disclosure clearly define the use of different categories of time units.

It is to be understood that both the foregoing general description and the following detailed description are illustrative and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1A is a schematic diagram illustrating an architecture of a communication system according to an embodiment.
FIG. 1B is a schematic diagram illustrating a time unit according to an embodiment.
FIG. 1C is a schematic diagram illustrating a channel scheduling according to an embodiment.
FIG. 2A is a schematic flowchart illustrating an information indication method according to an embodiment.
FIG. 3A is a schematic flowchart illustrating an information indication method according to an embodiment.
FIG. 3B is a schematic flowchart illustrating an information indication method according to an embodiment.
FIG. 4A is a schematic flowchart illustrating an information indication method according to an embodiment.
FIG. 4B is a schematic flowchart illustrating an information indication method according to an embodiment.
FIG. 5A is a schematic flowchart illustrating an information indication method according to an embodiment.
FIG. 6A is a schematic flowchart illustrating an information indication method according to an embodiment.
FIG. 7A is a schematic block diagram illustrating a first information indicating apparatus according to an embodiment.
FIG. 7B is a schematic block diagram illustrating a second information indicating apparatus according to an embodiment.
FIG. 8A is a schematic block diagram illustrating user equipment (UE) according to an embodiment.
FIG. 8B is a schematic block diagram illustrating a communication device according to an embodiment.

### DETAILED DESCRIPTION

Embodiments of the disclosure provide information indication methods, information indication apparatuses, a communication device, a communication system and a storage medium.

According to a first aspect of embodiments of the disclosure, there is provided an information indication method, including:
receiving first information,
in which the first information indicates at least one of:
   a time unit category available for performing multiple times of first channel transmissions; or
   a time unit category available for performing any one of multiple times of first channel transmissions.

In the above embodiment, since the first information explicitly indicates at least one of the time unit category available for performing the multiple times of first channel transmissions or the time unit category available for performing any one of the multiple times of first channel transmissions, it is possible to explicitly determine the time unit category available for performing the multiple times of first channel transmissions and/or the time unit category available for performing any one of the multiple times of first channel transmissions, thereby improving the reliability for performing the multiple times of first channel transmissions as compared with a case where the time unit category is undetermined.

In combination with some embodiments of the first aspect, in some embodiments, the first channel transmission is a physical downlink shared channel (PDSCH) transmission or a physical uplink shared channel (PUSCH) transmission.

In the above embodiment, the time unit category available for performing the multiple times of PDSCH or PUSCH transmissions and/or the time unit category available for performing any one of the multiple times of PDSCH or PUSCH transmissions may be clearly determined, thereby improving the reliability for performing the multiple times of PDSCH or PUSCH transmissions as compared with a case where the time unit category is undetermined.

In combination with some embodiments of the first aspect, in some embodiments, the time unit category includes at least one of: a first time unit category or a second time unit category, in which the first time unit category is a category of a subband full duplex (SBFD) symbol, and the second time unit category is a category of a non-SBFD symbol.

In the above embodiment, the first information explicitly indicates the category of symbols available for performing the multiple times of first channel transmissions or the category of symbols available for performing any one of the multiple times of first channel transmissions.

In combination with some embodiments of the first aspect, in some embodiments, the first information indicates one of:
that an SBFD symbol and a non-SBFD symbol are available for performing the multiple times of first channel transmissions, and the SBFD symbol or the non-SBFD symbol is available for performing the any one of the multiple times of first channel transmissions;
that an SBFD symbol and the non-SBFD symbol are available for performing the multiple times of first channel transmissions, and the SBFD symbol and the non-SBFD symbol are available for performing the any one of the multiple times of first channel transmissions;
that an SBFD symbol is available for performing the multiple times of first channel transmissions, and the SBFD symbol is available for performing the any one of the multiple times of first channel transmissions; or
that a non-SBFD symbol is available for performing the multiple times of first channel transmissions, and the non-SBFD symbol is available for performing the any one of the multiple times of first channel transmissions.

In the above embodiment, the first information explicitly indicates the symbol that is available for performing the multiple times of first channel transmissions and the symbol that is available for performing the any one of the multiple times of first channel transmissions, such that the multiple times of first channel transmissions are more reliable.

In combination with some embodiments of the first aspect, in some embodiments, receiving the first information includes:
receiving a first message,
in which the first message includes the first information, and the first message is one of:
   a downlink control information (DCI) message;
   a radio resource control (RRC) message;
   a media access control (MAC) control element (CE) message; or
   a system information block (SIB).

In the above embodiment, the first information may be received by reusing messages in a communication process, which may reduce signaling overhead, reduce resource consumption, and improve resource utilization efficiency.

In combination with some embodiments of the first aspect, in some embodiments, the first information includes a first information field and a second information field, and the method further includes:
in a case where the first information field is set to a first value and the second information field is empty, determining that an SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to a second value and the second information field is empty, determining that an SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is empty and the second information field is set to a third value, determining that an SBFD symbol is available for performing the multiple times of first channel transmissions, and the SBFD symbol is available for performing the any one of the multiple times of first channel transmissions;
in a case where the first information field is empty and the second information field is set to a fourth value, determining that a non-SBFD symbol is available for performing the multiple times of first channel transmissions, and the non-SBFD symbol is available for performing the any one of the multiple times of first channel transmissions;
in a case where the first information field is set to a fifth value and the second information field is set to a sixth value, determining that an SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to a fifth value and the second information field is set to a seventh value, determining that an SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is set to an eighth value and the second information field is empty or is set to a value, determining that an SBFD symbol is available for performing the multiple times of first channel transmissions, and the SBFD symbol is available for performing the any one of the multiple times of first channel transmissions; or
in a case where the first information field is set to a ninth value and the second information field is empty or is set to a value, determining that a non-SBFD symbol is available for performing the multiple times of first channel transmissions, and the non-SBFD symbol is available for performing the any one of the multiple times of first channel transmissions.

In the above embodiment, a content indicated by the first information may be determined by the values of the first information field and the second information field, and different values make the first information clearly indicate the symbol(s) available for performing the multiple times of first channel transmissions and the symbol(s) available for performing the any one of the multiple times of first channel transmissions. Since the available symbols are clearly determined, the multiple times of first channel transmissions are more reliable.

In combination with some embodiments of the first aspect, in some embodiments, the first information includes a third information field, and the method further includes:
in a case where the third information field is set to a first value, determining that an SBFD symbol and a non-SBFD symbol are available for performing the multiple times of first channel transmissions, and the SBFD symbol or the non-SBFD symbol is available for performing the any one of the multiple times of first channel transmissions;
in a case where the third information field is set to a second value, determining that an SBFD symbol and the non-SBFD symbol are available for performing the multiple times of first channel transmissions, and the SBFD symbol and the non-SBFD symbol are available for performing the any one of the multiple times of first channel transmissions;
in a case where the third information field is set to a third value, determining that an SBFD symbol is available for performing the multiple times of first channel transmissions, and the SBFD symbol is available for performing the any one of the multiple times of first channel transmissions; or
in a case where a third information field is set to a fourth value, determining that a non-SBFD symbol is available for performing the multiple times of first channel transmissions, and the non-SBFD symbol is available for performing the any one of the multiple times of first channel transmissions.

In the above embodiment, the content indicated by the first information may be determined by the value of the third information field, and different values make the first information clearly indicate symbol(s) available for performing the multiple times of first channel transmissions and symbol(s) available for performing the any one of the multiple times of first channel transmissions. Since the available symbols are clearly determined, the multiple times of first channel transmissions are more reliable.

In combination with some embodiments of the first aspect, in some embodiments, an SBFD symbol is a symbol including a downlink (DL) subband and an uplink (UL) subband in a frequency domain; and a non-SBFD symbol is a symbol not including a downlink (DL) subband and an uplink (UL) subband in a frequency domain.

In the above embodiment, the definitions of the SBFD symbol and of the non-SBFD symbol are clarified, such that the SBFD symbol and the non-SBFD symbol may be used more clearly.

In combination with some embodiments of the first aspect, in some embodiments, the SBFD symbol includes a guard band (GB) in the frequency domain.

In the above embodiment, interference between a DL signal in the DL subband and a UL signal in the UL subband is reduced by the frequency domain isolation.

In combination with some embodiments of the first aspect, in some embodiments, the method further includes:
receiving second information,
in which the second information is used for instructing a terminal to receive data in multiple time units.

In the above embodiment, after receiving the second information used for instructing the terminal to receive the data in the multiple time units, the data may be received in the multiple time units based on the second information.

According to a second aspect of embodiments of the disclosure, there is provided an information indication method, including:
sending first information,
in which the first information indicates at least one of:
   a time unit category available for performing multiple times of first channel transmissions; or
   a time unit category available for performing any one of multiple times of first channel transmissions.

In combination with some embodiments of the second aspect, in some embodiments, an SBFD symbol includes a GB in a frequency domain. In combination with some embodiments of the second aspect, in some embodiments, the time unit category includes at least one of: a first time unit category or a second time unit category, in which the first time unit category is a category of an SBFD symbol, and the second time unit category is a category of a non-SBFD symbol.

In combination with some embodiments of the second aspect, in some embodiments, the first information indicates one of:
that an SBFD symbol and a non-SBFD symbol are available for performing the multiple times of first channel transmissions, and the SBFD symbol or the non-SBFD symbol is available for performing the any one of the multiple times of first channel transmissions;
that an SBFD symbol and a non-SBFD symbol are available for performing the multiple times of first channel transmissions, and the SBFD symbol and the non-SBFD symbol are available for performing the any one of the multiple times of first channel transmissions;
that an SBFD symbol is available for performing the multiple times of first channel transmissions, and the SBFD symbol is available for performing the any one of the multiple times of first channel transmissions; or
that a non-SBFD symbol is available for performing the multiple times of first channel transmissions, and the non-SBFD symbol is available for performing the any one of the multiple times of first channel transmissions.

In combination with some embodiments of the second aspect, in some embodiments, sending the first information includes:
sending a first message,
in which the first message includes the first information, and the first message is one of:
   a DCI message;
   an RRC message;
   an MAC CE message; or
   an SIB.

In combination with some embodiments of the second aspect, in some embodiments, the first information includes a first information field and a second information field;
in a case where the first information field is set to a first value and the second information field is empty, the first information indicates that an SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to a second value and the second information field is empty, the first information indicates that an SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is empty and the second information field is set to a third value, the first information indicates that an SBFD symbol is available for performing the multiple times of first channel transmissions, and the SBFD symbol is available for performing the any one of the multiple times of first channel transmissions;
in a case where the first information field is empty and the second information field is set to a fourth value, the first information indicates that a non-SBFD symbol is available for performing the multiple times of first channel transmissions, and the non-SBFD symbol is available for performing the any one of the multiple times of first channel transmissions;
in a case where the first information field is set to a fifth value and the second information field is set to a sixth value, the first information indicates that an SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to the fifth value and the second information field is set to a seventh value, the first information indicates that an SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is set to an eighth value and the second information field is empty or has a value, the first information indicates that an SBFD symbol is available for performing the multiple times of first channel transmissions, and the SBFD symbol is available for performing the any one of the multiple times of first channel transmissions; or
in a case where the first information field is set to a ninth value and the second information field is empty or has a value, the first information indicates that a non-SBFD symbol is available for performing the multiple times of first channel transmissions, and the non-SBFD symbol is available for performing the any one of the multiple times of first channel transmissions.

In combination with some embodiments of the second aspect, in some embodiments, the first information includes a third information field;
in a case where the third information field is set to a first value, the first information indicates that an SBFD symbol and a non-SBFD symbol are available for performing the multiple times of first channel transmissions, and the SBFD symbol or the non-SBFD symbol is available for performing the any one of the multiple times of first channel transmissions;
in a case where the third information field is set to a second value, the first information indicates that an SBFD symbol and a non-SBFD symbol are available for performing the multiple times of first channel transmissions, and the SBFD symbol and the non-SBFD symbol are available for performing the any one of the multiple times of first channel transmissions;
in a case where the third information field is set to a third value, the first information indicates that an SBFD symbol is available for performing the multiple times of first channel transmissions, and the SBFD symbol is available for performing the any one of the multiple times of first channel transmissions; or
in a case where a third information field is set to a fourth value, the first information indicates that a non-SBFD symbol is available for performing the multiple times of first channel transmissions, and the non-SBFD symbol is available for performing the any one of the multiple times of first channel transmissions.

In combination with some embodiments of the second aspect, in some embodiments, the SBFD symbol is a symbol including a DL subband and a UL subband in a frequency domain; and the non-SBFD symbol is a symbol not including a DL subband and a UL subband in a frequency domain.

In combination with some embodiments of the second aspect, in some embodiments, the SBFD symbol includes a GB in the frequency domain.

In combination with some embodiments of the second aspect, in some embodiments, the method further includes:
receiving second information,
in which the second information is used for instructing a terminal to receive data in multiple time units.

According to a third aspect of embodiments of the disclosure, there is provided a terminal, including:
a transceiver module, configured to receive first information,
in which the first information indicates at least one of:
   a time unit category available for performing multiple times of first channel transmissions; or
   a time unit category available for performing any one of multiple times of first channel transmissions.

According to a fourth aspect of embodiments of the disclosure, there is provided a network device, including:
a transceiver module, configured to send first information,
in which the first information indicates at least one of:
   a time unit category available for performing multiple times of first channel transmissions; or
   a time unit category available for performing any one of multiple times of first channel transmissions.

According to a fifth aspect of embodiments of the disclosure, there is provided an information indication method, including:
sending, by a network device, first information to a terminal,
in which the first information indicates at least one of:
   a time unit category available for performing multiple times of first channel transmissions; or
   a time unit category available for performing any one of the multiple times of first channel transmissions.

According to a sixth aspect of embodiments of the disclosure, there is provided a communication system, including: a terminal, configured to implement the information indication method according to the first aspect; and a network device, configured to implement the information indication method according to the second aspect.

According to a seventh aspect of embodiments of the disclosure, there is provided a terminal, including:
one or more processors,
in which the terminal is configured to perform the information indication method according to the first aspect.

According to an eighth aspect of embodiments of the disclosure, there is provided a network device, including:
one or more processors,
in which the network device is configured to perform the information indication method according to the second aspect.

According to a ninth aspect of embodiments of the disclosure, there is provided a storage medium having stored therein instructions that, when executed on a communication device, cause the communication device to perform the information indication method according to optional implementations of the first aspect and of the second aspect.

According to a tenth aspect of embodiments of the disclosure, there is provided a program product that, when executed by a communication device, causes the communication device to perform the method according to optional implementations of the first aspect and of the second aspect.

According to an eleventh aspect of embodiments of the disclosure, there is provided a computer program that, when run on a computer, causes the computer to perform the methods according to optional implementations of the first aspect and of the second aspect.

According to a twelfth aspect of embodiments of the disclosure, there is provided a chip or chip system. The chip or chip system includes processing circuitry configured to perform the methods according to optional implementations of the first aspect and of the second aspect above.

It may be understood that the above terminal, network device, communication system, storage medium, program product, computer program, chip, or chip system are all configured to perform the methods according to embodiments of the disclosure. Therefore, for the beneficial effects that may be achieved, reference may be made to the beneficial effects in the corresponding methods, which is not repeated here.

Embodiments of the disclosure provide information indication methods, a terminal, a network device, a communication system, and a storage medium. In some embodiments, terms such as "information indication method", "information processing method" and "information transmission method" may be used interchangeably, and terms such as "communication system" and "information processing system" may be used interchangeably.

Embodiments of the disclosure are not exhaustive, but are merely illustrative of some embodiments, and are not intended to be a specific limitation on the scope of protection of the disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the disclosure, if there is no special description and logical conflict, the terms and/or descriptions in embodiments are consistent and may be referenced to each other, and technical features in different embodiments may be combined to form new embodiments according to their intrinsic logical relationships.

The terms used in embodiments of the disclosure is for the purpose of describing specific embodiments only, and is not intended to limit the disclosure.

In embodiments of the disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the disclosure, "multiple" refers to two or more.

In some embodiments, terms such as "at least one of", "one or more", "multiple", "multiple", may be used interchangeably.

In some embodiments, descriptions such as "at least one of A and B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments, descriptions such as "A or B" may include the following technical solutions depending on the situation: in some embodiments, A (A is executed regardless of B); in some embodiments, B (B is executed regardless of A); in some embodiments, execution is selected from A and B (selectively executing A or B). The same applies when there are more branches such as A, B, and C.

The prefix words such as "first" and "second" in embodiments of the disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "level", the ordinal number before "level" in "first level" and "second level" does not limit the priority between the "first level" and the "second level". As another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments, and may be understood as "equipment", "device", "circuit", "network element", "node", "function", "unit", "section", "system", "network", "chip", "chip system", "entity", "body", and the like in some situations.

In some embodiments, the "network" may be interpreted as an apparatus included in the network, for example, an access network device, a core network device, or the like.

In some embodiments, the "access network device (AN device)" may also be referred to as "a radio access network device (RAN device)", "a base station (BS)", "a radio base station", "a fixed station", may also be understood in some embodiments as "a node", "an access point", "a transmission point (TP)", "a reception point (RP)", "a transmission/reception point (TRP)", "a panel", "an antenna panel", "an antenna array", "a cell", "a macro cell", "a small cell", "a femto cell", "a pico cell", "a sector", "a cell group", "a service cell", "a carrier", "a component carrier", "a bandwidth part (BWP)", etc.

In some embodiments, "a terminal" or "a terminal device" may be referred to as "a user equipment (UE)", "a user terminal", "a mobile station (MS)", "a mobile terminal (MT)", a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client and the like

In some embodiments, obtaining data, information and the like may comply with laws and regulations of the country where it is located.

In some embodiments, data, information and the like may be obtained after obtaining the user's consent.

Further, each element, each row, or each column in the table of embodiments of the disclosure may be implemented as an independent embodiment, and any combination of any element, any row, or any column may also be implemented as an independent embodiment.

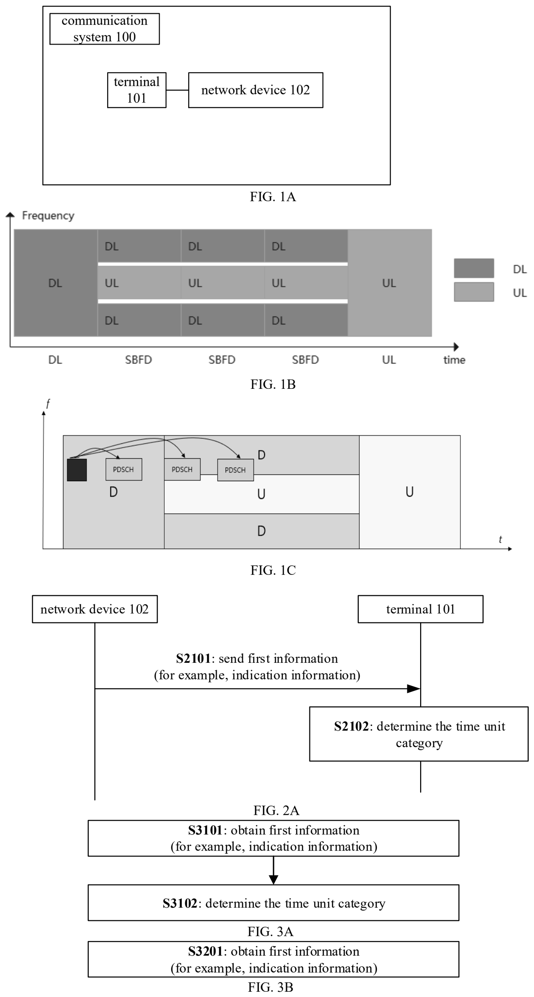

FIG. 1A is a schematic diagram illustrating an architecture of a communication system according to an embodiment.

As illustrated in FIG. 1A, the communication system 100 may include a terminal 101 and a network device 102.

In some embodiments, the network device 102 may include at least one of an access network device and a core network device.

In some embodiments, the terminal 101 includes, for example, at least one of a mobile phone, a wearable device, an Internet of Things device, an automobile with a communication function, a smart vehicle, a pad, a computer with a wireless transmission and reception function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, and a wireless terminal in smart home, which is not limited in the disclosure

In some embodiments, the access network device 102 is, for example, a node or device that accesses a terminal to a wireless network, and the access network device may include at least one of an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (Wi-Fi) system, which is not limited in the disclosure

In some embodiments, the technical solution of the disclosure may be applied to an Open RAN architecture. Moreover, an interface between or within the access network device according to embodiments of the disclosure may be replaced with an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, some or all functions of the remaining protocol layer are distributed in the DU, and the DU is centrally controlled by the CU, but the disclosure is not limited thereto.

In some embodiments, a core network device 103 may be one device including one or more network elements, or may be multiple devices or groups of devices including all or part of the above one or more network elements, respectively. The network element may be virtual or physical. The core network includes, for example, at least one of an evolved packet core (EPC), a 5G core network (5GCN), or a next generation core (NGC).

It may be understood that the communication system according to embodiments of the disclosure is to more clearly explain the technical solution according to embodiments of the disclosure, and does not constitute a limitation on the technical solution according to embodiments of the disclosure. As known by the skilled in the art that, with the evolution of the system architecture and the emergence of new business scenarios, the technical solution according to embodiments of the disclosure is applicable to similar technical problems.

Following embodiments of the disclosure may be applied to the communication system 100 illustrated in FIG. 1A or some of the subjects, which is not limited in embodiments of the disclosure. Each subject illustrated in FIG. 1A is an example, and the communication system may include all or some of the subjects illustrated in FIG. 1A, or other subjects not illustrated in FIG. 1A. The number and forms of the subjects are arbitrary, the connection relationship between the subjects is an example, the subjects may not be connected or connected, and the connection may be any form, including direct connection or indirect connection, wired connection or wireless connection.

Embodiment of the disclosure may be applied to long term evolution (LTE), LTE-Advanced (LTE-A), LTE-Beyond (LTE-B), SUPER 3G, IMT-Advanced, 4th generation (4G) mobile communication system, 5th generation (5G) mobile communication system, 5G new radio (NR), future radio access (FRA), new-radio access technology (RAT), new radio (NR), new radio access (NX), future generation radio access (FX), global system for mobile communications (GSM^{®}), CDMA2000, ultra-mobile broadband (UMB), IEEE 802.11 (Wi-Fi^{®}), IEEE 802.16 (WiMAX^{®}), and IEEE 802.20, ultra-wideband (UWB), Bluetooth^{®}, public land mobile network (PLMN) networks, device-to-device (D2D) systems, machine-to-machine (M2M) systems, Internet of Things (IoT) systems, vehicle-to-everything (V2X) systems, systems utilizing other communication methods, next-generation systems built upon them, or the like. Moreover, multiple systems may be combined (e.g., a combination of LTE or LTE-A with 5G) for application.

In order to improve UL coverage and throughput, research has been conducted on the duplex enhancement of subband full duplex.

In some embodiments, a carrier component (CC) in a DL or a flexible (F) symbol is divided in a frequency domain into multiple subbands (SB) including one UL subband and at least one (one or two) DL subband, and the base station may send a DL signal in the DL subband(s) and simultaneously receive a UL signal in the UL subband. The DL symbol or the F symbol may be configured in at least one of following manners:
being configured by TDD-UL-DL-ConfigCommon;
being configured by TDD-UL-DL-ConfigDedicated;
being configured by TDD-UL-DL-ConfigCommon and TDD-UL-DL-ConfigDedicated; or
being indicated by downlink control information format 2-0 (DCI format 2-0).

In a case where a symbol includes both a DL subband and a UL subband in the frequency domain, it may be referred to as an SBFD symbol.

In some embodiments, in a case where at least one SBFD symbol is included in each of multiple symbols included in one slot, the slot may be referred to as an SBFD slot. As illustrated in FIG. 1B, slot 0 is a DL slot, slot 1 to slot 3 are SBFD slots, and slot 4 is a UL slot.

In some embodiments, in a case where symbols included in one slot are all SBFD symbols, the slot may be referred to as the SBFD slot.

In some embodiments, there may also be a GB between the DL subband and the UL subband, and interference between the DL signal in the DL subband and the UL signal in the UL subband is reduced by the frequency domain isolation.

In some embodiments, the downlink control information (DCI) indicates that a physical downlink shared channel (PDSCH) is transmitted in multiple slots, and there are several forms:
1. In a PDSCH aggregation or repetition transmission, the DCI indicates that the PDSCH is received in k consecutive slots.
2. In a semi-persistent schedule (SPS) PDSCH transmission, the DCI activates an SPS PDSCH configured by radio resource control (RRC), and the terminal periodically receives the PDSCH on a certain time domain resource. In an embodiment, a count of repetitions (i.e., k) of the SPS PDSCH is configured by the RRC.
3. In a DCI scheduling multiple PDSCH transmissions, the DCI indicates one frequency domain resource allocation and multiple time domain resource allocations, and the PDSCH is received in multiple time-frequency resources.

In some embodiments, in the PUSCH transmission sent by the terminal in multiple slots indicated by the DCI or configured by the RRC, the following forms may exist:
1. A PUSCH repetition type A with or without available slot counting, for a scenario with available slot counting, it is determined to send the PUSCH in N*K consecutive slots based on the DCI indication and the available slot counting; for a scenario without available slot counting: the DCI indicates that the PUSCH is sent in N*K consecutive slots; and the PUSCH repetition type A may be enabled by configured grant (CG)-PUSCH type 1 and type 2 or enabled by dynamic grant (DG)-PUSCH;
2. In the CG-PUSCH type 1 or type 2 without repeated transmission, the PUSCH is periodically transmitted on certain time-frequency resources based on time-frequency resources configured by the RRC (type 1) or based on RRC-configured time-frequency resources indicated by the DCI (type 2);
3. In the TBoMS with or without the repetitive transmission, the N*K slots are determined to send the PUSCH based on the DCI indication and available slot counting;
4. One DCI schedules multiple PUSCH transmissions, the DCI indicates one frequency domain resource allocation and multiple time domain resource allocations, and the PUSCH is sent with multiple time-frequency resources.

In some embodiments, in the SBFD symbol, a frequency domain range usable for a DL transmission may be discontinuous, and a possible scenario is that the GB and UL subbands are not usable for the DL transmission. In this case, the frequency domain range of the DL symbol and the frequency domain range of the SBFD symbol usable for the DL transmission are different. In the SBFD symbol, the DL subband (and guard band) may not be usable for a UL transmission, and in this case, the frequency domain range of the SBFD symbol and the frequency domain range of the UL symbol usable for the UL transmission are different.

In some embodiments, the DCI indicates that the UE receives the PDSCH in multiple slots, e.g., PDSCH repetition, SPS PDSCH with or without repetition, multiple PDSCH scheduled by single DCI. In a case where the DCI indicates or the RRC configures the UE to send the PUSCH in multiple slots, the following problems need to be solved: whether multiple PDSCH/PUSCH may span SBFD and non-SBFD symbols; and/or whether a single PDSCH/PUSCH may span SBFD and non-SBFD symbols.

In some embodiments, in a PDSCH repetition scenario of the PDSCH transmission scenario:
1. Configuration parameter in the RRC: pdsch-AggregationFactor ENUMERATED {n2, n4, n8};
2. The PDSCH is received in k consecutive slots based on a frequency domain range FD#1 indicated by the DCI, where k = pdsch-AggregationFactor.

In some embodiments, in the SPS PDSCH scenario with or without repeated transmission of the PDSCH transmission scenario :
1. Configuration parameters in the RRC: a period P of the PDSCH, a number of HARQ processes, a number of repetitions k = pdsch-AggregationFactor-r16 ENUMERATED {n1, n2, n4, n8} and other information. If pdsch-AggregationFactor-r16 is not configured, the number of repetitions k is determined based on the pdsch-AggregationFactor in the information element PDSCH-config;
2. The PDSCH is periodically received based on a time-frequency range indicated by the DCI.

In some embodiments, in the multiple PDSCH scheduled by single DCI scenario of the PUSCH transmission scenario: as illustrated in FIG. 1C, based on multiple time domain ranges and a frequency domain range FD#1 indicated by the DCI, the PDSCH is received with the FD#1 within the multiple time domain ranges.

In some embodiments, in the PUSCH repetition type A scenario of the PUSCH transmission scenario:

The configuration parameter in the RRC includes at least one of: numberOfRepetitions-r16 ENUMERATED {n1, n2, n3, n4, n7, n8, n12, n16}; pusch-AggregationFactor ENUMERATED {n2, n4, n8} and/or repK ENUMERATED {n1, n2, n4, n8};
based on the frequency domain range FD#1 indicated by the DCI and configured by the RRC, the PUSCH is sent in N*K consecutive slots (available SlotCounting-r17 is not configured), and the PUSCH is sent in N*K slots (available SlotCounting-r17 is configured), where N = 1 (i.e., one TB is transmitted in one slot). For a DG-PUSCH repetition type A, if numberOfRepetitions-r16 is configured, K = numberOfRepetitions-r16; otherwise, if push-AggregationFactor is configured, K = push-AggregationFactor; otherwise, K = 1. For the type 1/type 2 CG-PUSCH repetition type A, if numberOfRepetitions-r16 is configured, K = numberOfRepetitions-r16; otherwise, if repK is configured, K = repK.

In some embodiments, in the CG-PUSCH type 1 or type 2 scenario with repetition of the PUSCH transmission scenario:
1. Type 1 CG-PUSCH: after the RRC is configured, after waiting for a certain activation time, the PUSCH is periodically sent with the configured time-frequency resources by using the configured transmission parameter;
2. Type 2 CG-PUSCH:
   parameters configured by RRC: period, open-loop power control, waveform, redundancy version, count of repetitions, frequency hopping and/or number of Hybrid Automatic Repeat reQuest (HARQ) processes, or the like;
   parameters activated and configured by DCI: time domain resources, frequency domain resources, demodulation reference signal (DMRS) and/or modulation and Coding Scheme (MCS) (an activation time is determined);
   The PUSCH is periodically sent in combination with the time-frequency resources configured by RRC and activated and configured by DCI;
   The terminal needs to send an information element through an MAC CE to confirm activation or deactivation of the type 2 CG-PUSCH (to avoid confusion caused by not sending the PUSCH when there is no UL data).

In some embodiments, in the multiple PDSCH scheduled by single DCI scenario of the PUSCH transmission scenario, based on the multiple time domain ranges and the frequency domain range FD#1 indicated by the DCI, the PDSCH is sent with the FD#1 within the multiple time domain ranges.

In some embodiments, in a TBoMS scenario with or without repetition the PUSCH transmission scenario,
parameters configured in RRC:
numberOfSlotsTBoMS-r17 ENUMERATED {n1, n2, n4, n8, spare4, spare3, spare2, spare 1 };
numberOfRepetitions-r16 ENUMERATED {n1, n2, n3, n4, n7, n8, n12, n16};
one TB is transmitted in N = numberOfSlotsTBoMS-R17 slots, in which the transmission is repeated N times in the N slots. If numberOfRepetitions-r16 is configured, K = numberOfRepetitions-r16, otherwise K=1.

FIG. 2A is a schematic diagram illustrating an interaction of an information indication method according to embodiments of the disclosure. As illustrated in FIG. 2A, embodiments of the disclosure relate to an information indication method performed by a communication system 100. The method includes the following.

**In step S2101,** a network device sends first information to a terminal.

In some embodiments, the terminal receives the first information sent by the network device.

In some embodiments, the first information may be indication information.

In some embodiments, the first information indicates at least one of:
a time unit category available for performing multiple times of first channel transmissions; or
a time unit category available for performing any one of multiple times of first channel transmissions. The time unit category includes at least one of: a first time unit category or a second time unit category.

In some embodiments, the first channel transmission is a PDSCH transmission or a PUSCH transmission.

In some embodiments, the time unit may be a unit of time, such as, but not limited to, a symbol, a slot, or the like.

In some embodiments, the first time unit category is a category of an SBFD symbol, and the second time unit category is a category of a non-SBFD symbol.

In some embodiments, the SBFD symbol is a symbol including a DL subband and a UL subband in a frequency domain; and the non-SBFD symbol is a symbol not including a DL subband and a UL subband in a frequency domain.

In some embodiments, the SBFD symbol is a symbol including both the DL subband and the UL subband in the frequency domain; and the non-SBFD symbol is a symbol not including the DL subband and the UL subband in the frequency domain.

In some embodiments, the SBFD symbol includes a guard band (GB) in the frequency domain.

In some embodiments, the first information indicates symbol(s) available for performing multiple times of PDSCH transmissions and performing any one of the multiple times of PDSCH transmissions in a case where one DCI indicates multiple PDSCH transmissions.

In some embodiments, the first information indicates that the SBFD symbol and the non-SBFD symbol are available for performing the multiple times of first channel transmissions, and the SBFD symbol or the non-SBFD symbol is available for performing the any one of the multiple times of first channel transmissions.

In some embodiments, the first information indicates that the SBFD symbol and the non-SBFD symbol are available for performing the multiple times of first channel transmissions, and the SBFD symbol and the non-SBFD symbol are available for performing the any one of the multiple times of first channel transmissions.

In some embodiments, the first information indicates that the SBFD symbol is available for performing the multiple times of first channel transmissions, and the SBFD symbol is available for performing the any one of the multiple times of first channel transmissions.

In some embodiments, the first information indicates that the non-SBFD symbol is available for performing the multiple times of first channel transmissions, and the non-SBFD symbol is available for performing the any one of the multiple times of first channel transmissions.

In some embodiments, the first information indicates that the multiple times of PDSCH transmissions may be performed in both the SBFD symbol and the non-SBFD symbol simultaneously, and a single PDSCH transmission may only be performed in the SBFD symbol or in the non-SBFD symbol.

In some embodiments, the first information indicates that the multiple times of PDSCH transmissions may be performed in both the SBFD symbol and the non-SBFD symbol simultaneously, and a single PDSCH transmission may be performed in both the SBFD symbol and the non-SBFD symbol simultaneously.

In some embodiments, the first information indicates that the multiple times of PDSCH transmissions may only be performed in the SBFD symbol, and a single PDSCH transmission may only be performed in the SBFD symbol.

In some embodiments, the first information indicates that the multiple times of PDSCH transmissions may only be performed in the SBFD symbol, and a single PDSCH transmission may only be performed in the non-SBFD symbol.

In some embodiments, the first information includes a first information field and a second information field.

In some embodiments, in a case where the first information field is set to a first value and the second information field is empty, the first information indicates that the SBFD symbol and the non-SBFD symbol are available for performing the multiple times of first channel transmissions, and the SBFD symbol or the non-SBFD symbol is available for performing the any one of the multiple times of first channel transmissions.

In some embodiments, in a case where the first information field is set to a second value and the second information field is empty, the first information indicates that the SBFD symbol and the non-SBFD symbol are available for performing the multiple times of first channel transmissions, and the SBFD symbol and the non-SBFD symbol are available for performing the any one of the multiple times of first channel transmissions.

In some embodiments, in a case where the first information field is empty and the second information field is set to a third value, the first information indicates that the SBFD symbol is available for performing the multiple times of first channel transmissions, and the SBFD symbol is available for performing the any one of the multiple times of first channel transmissions.

In some embodiments, in a case where the first information field is empty and the second information field is set to a fourth value, the first information indicates that the non-SBFD symbol is available for performing the multiple times of first channel transmissions, and the non-SBFD symbol is available for performing the any one of the multiple times of first channel transmissions.

In some embodiments, in a case where the first information field is set to a fifth value and the second information field is set to a sixth value, the first information indicates that the SBFD symbol and the non-SBFD symbol are available for performing the multiple times of first channel transmissions, and the SBFD symbol or the non-SBFD symbol is available for performing the any one of the multiple times of first channel transmissions.

In some embodiments, in a case where that the first information field is set to the fifth value and the second information field is set to a seventh value, the first information indicates that the SBFD symbol and the non-SBFD symbol are available for performing the multiple times of first channel transmissions, and the SBFD symbol and the non-SBFD symbol are available for performing the any one of the multiple times of first channel transmissions.

In some embodiments, in a case where the first information field is set to an eighth value and the second information field is empty or is set to a value, the first information indicates that the SBFD symbol is available for performing the multiple times of first channel transmissions, and the SBFD symbol is available for performing the any one of the multiple times of first channel transmissions.

In some embodiments, in a case where the first information field is set to a ninth value and the second information field is empty or is set to a value, the first information indicates that the non-SBFD symbol is available for performing the multiple times of first channel transmissions, and the non-SBFD symbol is available for performing the any one of the multiple times of first channel transmissions.

In some embodiments, the first information field and the second information field collectively indicate whether the multiple times of PDSCH transmissions may be performed in both the SBFD symbol and the non-SBFD symbol simultaneously, may be performed only in the SBFD symbol, or may be performed only in the non-SBFD symbol, and whether a single PDSCH transmission may be performed in both the SBFD symbol and the non-SBFD symbol simultaneously.

In some embodiments, in a case where the first information field indicates the first value and the second information field indicates a null value, the first information indicates that the multiple times of PDSCH transmissions may be performed in both the SBFD symbol and the non-SBFD symbol simultaneously, and that a single PDSCH transmission may be performed only in the SBFD symbol or in the non-SBFD symbol.

In some embodiments, in a case where the first information field indicates the second value and the second information field indicates a null value, the first information indicates that the multiple times of PDSCH transmissions may be performed in both the SBFD symbol and the non-SBFD symbol simultaneously, and that a single PDSCH transmission may be performed in both the SBFD symbol and the non-SBFD symbol.

In some embodiments, in a case where the first information field indicates a null value and the second information field indicates the third value, the multiple times of PDSCH transmissions may be performed only in the SBFD symbol, and a single PDSCH transmission may be performed only in the SBFD symbol.

In some embodiments, in a case where the first information field indicates a null value and the second information field indicates the fourth value, the multiple times of PDSCH transmissions may be performed only in the non-SBFD symbol, and a single PDSCH transmission may be performed only in the non-SBFD symbol.

For example, as shown in Table 1, Table 1 shows a correspondence between values of the first information field and of the second information field and contents indicated by the first information.

**Table 1**

| **Values of the first information field and of the second information field** | **Contents indicated by the first information** |
|---|---|
| the first information field is set to 1 and the second information field is empty | the multiple times of PDSCH transmissions may be performed in both the SBFD symbol and the non-SBFD symbol simultaneously; |
| | a single PDSCH transmission may be performed only in the SBFD symbol or in the non-SBFD symbol |
| the first information field is set to 0 and the second information field is empty | the multiple times of PDSCH transmissions may be performed in both the SBFD symbol and the non-SBFD symbol simultaneously; and |
| | a single PDSCH transmission may be performed in both the SBFD symbol and the non-SBFD symbol simultaneously |
| the first information field is empty and the second information field is set to 1 | the multiple times of PDSCH transmissions may be performed only in the SBFD symbol; and |
| | a single PDSCH transmission may be performed only in the SBFD symbol |
| the first information field is empty and the second information field is set to 0 | the multiple times of PDSCH transmissions may be performed only in the non-SBFD symbol; and |
| | a single PDSCH transmission may be performed only in the non-SBFD symbol |

In some embodiments, in a case where the first information field indicates the fifth value and the second information field indicates the sixth value, the multiple times of PDSCH transmissions may be performed in both the SBFD symbol and the non-SBFD symbol simultaneously, and a single PDSCH transmission may be performed only in the SBFD symbol or in the non-SBFD symbol.

In some embodiments, in a case where the first information field indicates the fifth value and the second information field indicates the seventh value, the multiple times of PDSCH transmissions may be performed in both the SBFD symbol and the non-SBFD symbol simultaneously, and a single PDSCH transmission may be performed in both the SBFD symbol and the non-SBFD symbol.

In some embodiments, in a case where the first information field indicates the eighth value and the second information field indicates a null value or is set to a value, the multiple times of PDSCH transmissions may be performed only in the SBFD symbol, and a single PDSCH transmission may be performed only in the SBFD symbol.

In some embodiments, in a case where the first information field indicates the ninth value and the second information field indicates a null value or is set to a value, the multiple times of PDSCH transmissions may be performed only in the non-SBFD symbol, and a single PDSCH transmission may be performed only in the non-SBFD symbol.

For example, as illustrated in Table 2, Table 2 shows the correspondence between the values of the first information field and of the second information field and the contents indicated by the first information.

**Table 2:**

| **Values of the first information field and the second information field** | **Contents indicated by the first information** |
|---|---|
| the first information field is set to 0 and the second information field is set to 1 | the multiple times of PDSCH transmissions may be performed in both the SBFD symbol and the non-SBFD symbol simultaneously; and |
| | a single PDSCH transmission may be performed only in the SBFD symbol or in the non-SBFD symbol |
| the first information field is set to 0 and the second information field is set to 0 | the multiple times of PDSCH transmissions may be performed in both the SBFD symbol and the non-SBFD symbol simultaneously; and |
| | a single PDSCH transmission may be performed in both the SBFD symbol and in the non-SBFD symbol |
| the first information field is set to 1 and the second information field is set to 1 | the multiple times of PDSCH transmissions may be performed only in the SBFD symbol; and |
| | a single PDSCH transmission may be performed only in the SBFD symbol |
| the first information field is set to 2 and the second information field is set to 0 | the multiple times of PDSCH transmissions may be performed only in the non-SBFD symbol; and |
| | a single PDSCH transmission may be performed only in the non-SBFD symbol |

In some embodiments, the first information includes a third information field.

In some embodiments, in a case where the third information field is set to the first value, the first information indicates that the SBFD symbol and the non-SBFD symbol are available for performing the multiple times of first channel transmissions, and the SBFD symbol or the non-SBFD symbol is available for performing the any one of the multiple times of first channel transmissions.

In some embodiments, in a case where the third information field is set to the second value, the first information indicates that the SBFD symbol and the non-SBFD symbol are available for performing the multiple times of first channel transmissions, and the SBFD symbol and the non-SBFD symbol are available for performing the any one of the multiple times of first channel transmissions.

In some embodiments, in a case where the third information field is set to a third value, the first information indicates that the SBFD symbol is available for performing the multiple times of first channel transmissions, and the SBFD symbol is available for performing the any one of the multiple times of first channel transmissions.

In some embodiments, in a case where a third information field is set to the fourth value, the first information indicates that the non-SBFD symbol is available for performing the multiple times of first channel transmissions, and the non-SBFD symbol is available for performing the any one of the multiple times of first channel transmissions.

In some embodiments, the third information field indicates that the multiple times of PDSCH transmissions may be performed in both the SBFD symbol and the non-SBFD symbol simultaneously, that the multiple times of PDSCH transmissions may be performed only in the SBFD symbol or only in the non-SBFD symbol, and whether a single PDSCH transmission may be performed in both the SBFD symbol and the non-SBFD symbol simultaneously.

In some embodiments, in a case where the third information field indicates the first value, the first information indicates that the multiple times of PDSCH transmissions may be performed in both the SBFD symbol and the non-SBFD symbol simultaneously, and a single PDSCH transmission may be performed only in the SBFD symbol or the non-SBFD symbol.

In some embodiments, in a case where the third information field indicates the second value, the first information indicates that the multiple times of PDSCH transmissions may be performed in both the SBFD symbol and the non-SBFD symbol simultaneously, and a single PDSCH transmission may be performed in the SBFD symbol and in the non-SBFD symbol.

In some embodiments, in a case where the third information field indicates the third value, the first information indicates that the multiple times of PDSCH transmissions may be performed only in the SBFD symbol, and a single PDSCH transmission may be performed only in the SBFD symbol.

In some embodiments, in a case where the third information field indicates the fourth value, the first information indicates that the multiple times of PDSCH transmissions may be performed only in the non-SBFD symbol, and a single PDSCH transmission may be performed only in the non-SBFD symbol.

For example, as shown in Table 3, Table shows the correspondence between the value of the third information field and the contents indicated by the first information:

**Table 3:**

| **Value of the third information field** | **Contents indicated by the first information** |
|---|---|
| the first value is 2 (that is, the binary code is 10) | the multiple times of PDSCH transmissions may be performed in both the SBFD symbol and the non-SBFD symbol simultaneously; and |
| | a single PDSCH transmission may be performed only in the SBFD symbol or in the non-SBFD symbol |
| the second value is 3 (that is, the binary code is 11) | the multiple times of PDSCH transmissions may be performed in both the SBFD symbol and the non-SBFD symbol simultaneously; and |
| | a single PDSCH transmission may be performed in the SBFD symbol and in the non-SBFD symbol |
| the third value is 0 (that is, the binary code is 00) | the multiple times of PDSCH transmissions may be performed only in the SBFD symbol; and |
| | a single PDSCH transmission may be performed only in the SBFD symbol |
| the fourth value is 1 (that is, the binary code is 01) | the multiple times of PDSCH transmissions may be performed only in the non-SBFD symbol; and |
| | a single PDSCH transmission may be performed only in the non-SBFD symbol |

In some embodiments, the terminal receives a first message sent by the network device. The first message includes the first information. The first message is one of: a DCI message; an RRC message; an MAC CE message; or an SIB1 message.

In some embodiments, the terminal receives the DCI message sent by the network device, and the DCI message includes the first information.

In some embodiments, the terminal receives the RRC message sent by the network device, and the RRC message includes the first information.

In some embodiments, the terminal receives the MAC CE message sent by the network device, and the MAC CE message includes the first information.

In some embodiments, the terminal receives the SIB1 message sent by the network device, and the SIB1 message includes the first information.

In some embodiments, a frequency domain range of the non-SBFD symbol indicated by the Frequency Domain Resource Allocation (FDRA) field in the DCI message is a first range (for example, FD # 1).

In some embodiments, in the SBFD symbol, a frequency domain range that is available for performing a DL transmission is called "DL frequency domain range", and a frequency domain range that is not available for performing the DL transmission is called "non-DL frequency domain range". A second range (for example, FD#2) is a frequency domain range in which the first range overlaps with the DL frequency domain range.

In some embodiments, the DL frequency domain range may be a frequency domain range in which the DL subband is located.

In some embodiments, the DL frequency domain range is a frequency domain range in which the DL subband and the GB are located.

In some embodiments, before the network device sends the first information to the terminal, the network device sends the second information to the terminal, in which the second information is used for instructing the terminal to receive data in multiple time units.

**In step S2102,** the terminal determines the time unit category.

In some embodiments, the terminal determines the content indicated by the first information based on an information field of the first information.

In an embodiment, the terminal determines symbol(s) available for performing the multiple times of PDSCH transmissions and symbol(s) available for performing any PDSCH transmission based on the first information.

In some embodiments, the terminal receives the first message. The first message includes the first information. The terminal determines symbol(s) available for determining the multiple times of PDSCH transmissions and symbol(s) available for performing any PDSCH transmission based on the first information.

In some embodiments, the first information includes the first information field and the second information field. For example, the first information field and the second information field are newly added fields (or called additional fields) or redundant fields.

In some embodiments, in a case where the first information field is set to the first value and the second information field is empty, it is determined that the SBFD symbol and the non-SBFD symbol are available for performing the multiple times of first channel transmissions, and the SBFD symbol or the non-SBFD symbol is available for performing the any one of the multiple times of first channel transmissions.

In some embodiments, in a case where the first information field is set to the second value and the second information field is empty, it is determined that the SBFD symbol and the non-SBFD symbol are available for performing the multiple times of first channel transmissions, and the SBFD symbol and the non-SBFD symbol are available for performing the any one of the multiple times of first channel transmissions.

In some embodiments, in a case where the first information field is empty and the second information field is set to the third value, it is determined that the SBFD symbol is available for performing the multiple times of first channel transmissions, and the SBFD symbol is available for performing the any one of the multiple times of first channel transmissions.

In some embodiments, in a case where the first information field is empty and the second information field is set to the fourth value, it is determined that the non-SBFD symbol is available for performing the multiple times of first channel transmissions, and the non-SBFD symbol is available for performing the any one of the multiple times of first channel transmissions.

In some embodiments, in a case where the first information field is set to the fifth value and the second information field is set to the sixth value, it is determined that the SBFD symbol and the non-SBFD symbol are available for performing the multiple times of first channel transmissions, and the SBFD symbol or the non-SBFD symbol is available for performing the any one of the multiple times of first channel transmissions.

In some embodiments, in a case where the first information field is set to the fifth value and the second information field is set to the seventh value, it is determined that the SBFD symbol and the non-SBFD symbol are available for performing the multiple times of first channel transmissions, and the SBFD symbol and the non-SBFD symbol are available for performing the any one of the multiple times of first channel transmissions.

In some embodiments, in a case where the first information field is set to the eighth value and the second information field is empty or is set to a value, it is determined that the SBFD symbol is available for performing the multiple times of first channel transmissions, and the SBFD symbol is available for performing the any one of the multiple times of first channel transmissions.

In some embodiments, in a case where the first information field is set to the ninth value and the second information field is empty or is set to a value, it is determined that the non-SBFD symbol is available for performing the multiple times of first channel transmissions, and the non-SBFD symbol is available for performing the any one of the multiple times of first channel transmissions.

In some embodiments, the first information includes the third information field. For example, the third information field is a newly added field (or called additional field) or a redundant field.

In some embodiments, in a case where the third information field is set to the first value, it is determined that the SBFD symbol and the non-SBFD symbol are available for performing the multiple times of first channel transmissions, and the SBFD symbol or the non-SBFD symbol is available for performing the any one of the multiple times of first channel transmissions.

In some embodiments, in a case where the third information field is set to the second value, it is determined that the SBFD symbol and the non-SBFD symbol are available for performing the multiple times of first channel transmissions, and the SBFD symbol and the non-SBFD symbol are available for performing the any one of the multiple times of first channel transmissions.

In some embodiments, in response to that the third information field is set to the third value, it is determined that the SBFD symbol is available for performing the multiple times of first channel transmissions, and the SBFD symbol is available for performing the any one of the multiple times of first channel transmissions.

In some embodiments, in response to that a third information field is set to the fourth value, it is determined that the non-SBFD symbol is available for performing the multiple times of first channel transmissions, and the non-SBFD symbol is available for performing the any one of the multiple times of first channel transmissions.

In some embodiments, the term "information" may be used interchangeably with terms such as "message", "signal", "signaling", "report", "configuration", "indication", "instruction", "command", "channel", "parameter", "field", and "data".

In some embodiments, the term "sending" may be used interchangeably with terms such as "transmitting", "reporting", or "transferring".

The information indication methods according to embodiments of the disclosure may include at least one of step S2101 to step S2102. For example, step S2101 may be implemented as an independent embodiment, step S2102 may be implemented as an independent embodiment, and step S2101 combined with step S2102 may be implemented as an independent embodiment, but the disclosure is not limited thereto.

FIG. 3A is a schematic flowchart illustrating an information indication method according to embodiments of the disclosure. As illustrated in FIG. 3A, embodiments of the disclosure relate to an information indication method performed by a terminal 101. The method includes the following.

**In step S3101,** first information is obtained.

In some embodiments, for an optional implementation of step S3101, reference may be made to optional implementations of step S2101 in FIG. 2A and to other related parts in embodiments related to FIG. 2A, which are not repeated here.

In some embodiments, the terminal receives the first information sent by a network device, but the disclosure is not limited thereto, and the terminal may also receive the first information sent by other subjects.

In some embodiments, the terminal obtains the first information specified by a protocol.

In some embodiments, the terminal obtains the first information from upper layer(s).

In some embodiments, the terminal obtains the first information after performing processing.

In some embodiments, step S3101 is omitted, and in this case, the terminal autonomously implements the function indicated by the first information, or the above function is a default or default setting.

**In step S3102,** a time unit category is determined.

In some embodiments, for an optional implementation of step S3102, reference may be made to the optional implementation of step S2102 in FIG. 2A and to other related parts in embodiments related to FIG. 2A, which are not repeated here.

The information indication method according to embodiments of the disclosure may include at least one of steps S3101 to S3102. For example, step S3101 may be implemented as an independent embodiment, step S3102 may be implemented as an independent embodiment, or step S3101 combined with step S3102 may be implemented as an independent embodiment, but the disclosure is not limited thereto.

FIG. 3B is a schematic flowchart illustrating an information indication method according to embodiments of the disclosure. As illustrated in FIG. 3B, embodiments of the disclosure relates to an information indication method performed by a terminal 101. The method includes the following.

**In step S3201,** first information is obtained.

In some embodiments, the first information indicates at least one of:
a time unit category available for performing multiple times of first channel transmissions; or
a time unit category available for performing any one of multiple times of first channel transmissions.

In some embodiments, for an optional implementation of step S3201, reference may be made to the optional implementation of step S2101 in FIG. 2A and to other related parts in embodiments related to FIG. 2A, which are not repeated here.

In some embodiments, the terminal receives the first information sent by a network device, but the disclosure is not limited thereto, and the terminal may also receive the first information sent by other subjects.

In some embodiments, the terminal obtains the first information specified by a protocol.

In some embodiments, the terminal obtains the first information from upper layer(s).

In some embodiments, the terminal obtains the first information after performing processing.

In some embodiments, step S3201 is omitted, and in this case, the terminal autonomously implements the function indicated by the first information, or the above function is a default or default setting.

In some embodiments, the first channel transmission is a PDSCH transmission or a PUSCH transmission.

In some embodiments, the time unit category includes at least one of: a first time unit category or a second time unit category, in which the first time unit category is a category of an SBFD symbol, and the second time unit category is a category of a non-SBFD symbol.

In some embodiments, the first information indicates one of:
that the SBFD symbol and the non-SBFD symbol are available for performing the multiple times of first channel transmissions, and the SBFD symbol or the non-SBFD symbol is available for performing the any one of the multiple times of first channel transmissions;
that the SBFD symbol and the non-SBFD symbol are available for performing the multiple times of first channel transmissions, and the SBFD symbol and the non-SBFD symbol are available for performing the any one of the multiple times of first channel transmissions;
that the SBFD symbol is available for performing the multiple times of first channel transmissions, and the SBFD symbol is available for performing the any one of the multiple times of first channel transmissions; or
that the non-SBFD symbol is available for performing the multiple times of first channel transmissions, and the non-SBFD symbol is available for performing the any one of the multiple times of first channel transmissions.

In some embodiments, receiving the first information includes:
receiving a first message,
in which the first message includes the first information, and the first message is one of:
   a DCI message;
   an RRC message;
   an MAC CE message; or
   an SIB.

In some embodiments, the first information includes a first information field and a second information field, and the method further includes:
in a case where the first information field is set to a first value and the second information field is empty, determining that the SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to a second value and the second information field is empty, determining that the SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is empty and the second information field is set to a third value, determining that the SBFD symbol is available for performing the multiple times of first channel transmissions, and the SBFD symbol is available for performing the any one of the multiple times of first channel transmissions;
in a case where the first information field is empty and the second information field is set to a fourth value, determining that the non-SBFD symbol is available for performing the multiple times of first channel transmissions, and the non-SBFD symbol is available for performing the any one of the multiple times of first channel transmissions;
in a case where the first information field is set to a fifth value and the second information field is set to a sixth value, determining that the SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to the fifth value and the second information field is set to a seventh value, determining that the SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is set to an eighth value and the second information field is empty or is set to a value, determining that the SBFD symbol is available for performing the multiple times of first channel transmissions, and the SBFD symbol is available for performing the any one of the multiple times of first channel transmissions; or
in a case where the first information field is set to a ninth value and the second information field is empty or is set to a value, determining that the non-SBFD symbol is available for performing the multiple times of first channel transmissions, and the non-SBFD symbol is available for performing the any one of the multiple times of first channel transmissions.

In some embodiments, the first information includes a third information field, and the method further includes:
in a case where the third information field is set to a first value, determining that the SBFD symbol and a non-SBFD symbol are available for performing the multiple times of first channel transmissions, and the SBFD symbol or the non-SBFD symbol is available for performing the any one of the multiple times of first channel transmissions;
in a case where the third information field is set to a second value, determining that the SBFD symbol and the non-SBFD symbol are available for performing the multiple times of first channel transmissions, and the SBFD symbol and the non-SBFD symbol are available for performing the any one of the multiple times of first channel transmissions;
in a case where the third information field is set to a third value, determining that the SBFD symbol is available for performing the multiple times of first channel transmissions, and the SBFD symbol is available for performing the any one of the multiple times of first channel transmissions; or
in a case where a fourth information field is set to a fourth value, determining that the non-SBFD symbol is available for performing the multiple times of first channel transmissions, and the non-SBFD symbol is available for performing the any one of the multiple times of first channel transmissions.

In some embodiments, the non-SBFD symbol is a symbol not including a DL subband and a UL subband in a frequency domain.

In some embodiments, the SBFD symbol includes a GB in the frequency domain.

In some embodiments, the method further includes:
receiving second information,
in which the second information is used for instructing a terminal to receive data in multiple time units.

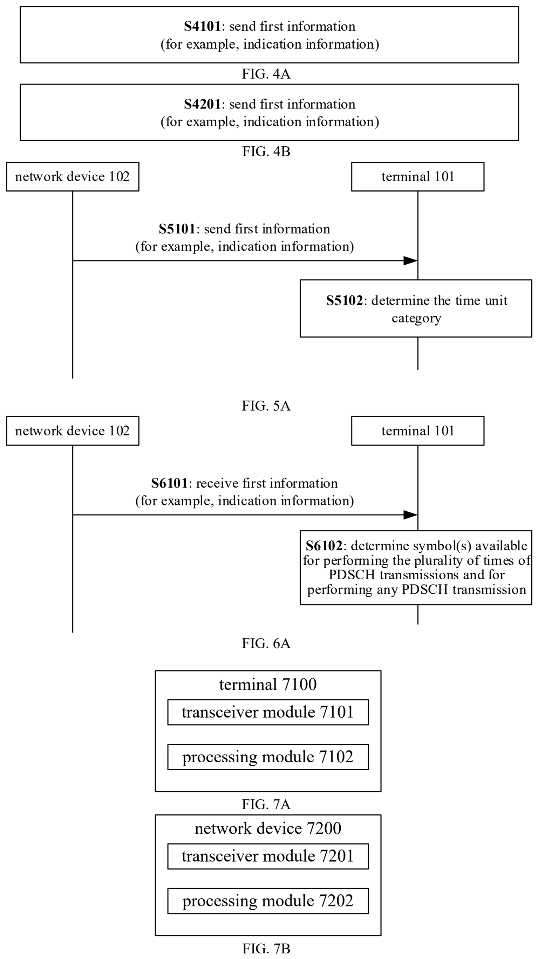

FIG. 4A is a schematic flowchart illustrating an information indication method according to embodiments of the disclosure. As illustrated in FIG. 4A, embodiments of the disclosure relates to an information indication method performed by a network device 102, and the method includes the following.

**In step S4101,** first information is sent.

In some embodiments, for an optional implementation of step S4101, reference may be made to the optional implementation of step S2101 in FIG. 2A and to other related parts in embodiments related to FIG. 2A, which are not repeated here.

FIG. 4B is a schematic flowchart illustrating an information indication method according to embodiments of the disclosure. As illustrated in FIG. 4B, embodiments of the disclosure relates to an information indication method performed by a network device 102. The method includes the following.

**In step S4201,** first information is sent.

In some embodiments, for an optional implementation of step S4201, reference may be made to the optional implementation of step S2101 in FIG. 2A and to other related parts in embodiments related to FIG. 2A, which are not repeated here.

In some embodiments, the first information is sent, in which the first information indicates at least one of:
a time unit category available for performing multiple times of first channel transmissions; or
a time unit category available for performing any one of multiple times of first channel transmissions.

In some embodiments, the time unit category includes at least one of: a first time unit category or a second time unit category, in which the first time unit category is a category of an SBFD symbol, and the second time unit category is a category of a non-SBFD symbol.

In some embodiments, the first information indicates one of:
that an SBFD symbol and a non-SBFD symbol are available for performing the multiple times of first channel transmissions, and the SBFD symbol or the non-SBFD symbol is available for performing the any one of the multiple times of first channel transmissions;
that an SBFD symbol and a non-SBFD symbol are available for performing the multiple times of first channel transmissions, and the SBFD symbol and the non-SBFD symbol are available for performing the any one of the multiple times of first channel transmissions;
that the SBFD symbol is available for performing the multiple times of first channel transmissions, and the SBFD symbol is available for performing the any one of the multiple times of first channel transmissions; or
that the non-SBFD symbol is available for performing the multiple times of first channel transmissions, and the non-SBFD symbol is available for performing the any one of the multiple times of first channel transmissions.

In some embodiments, sending the first information includes:
sending a first message,
in which the first message includes the first information, and the first message is one of:
a DCI message;
an RRC message;
an MAC CE message; or
an SIB.

In some embodiments, the first information includes a first information field and a second information field;
in a case where the first information field is set to a first value and the second information field is empty, the first information indicates that an SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to a second value and the second information field is empty, the first information indicates that the an SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is empty and the second information field is set to a third value, the first information indicates that the SBFD symbol is available for performing the multiple times of first channel transmissions, and the SBFD symbol is available for performing the any one of the multiple times of first channel transmissions;
in a case where the first information field is empty and the second information field is set to a fourth value, the first information indicates that the non-SBFD symbol is available for performing the multiple times of first channel transmissions, and the non-SBFD symbol is available for performing the any one of the multiple times of first channel transmissions;
in a case where the first information field is set to a fifth value and the second information field is set to a sixth value, the first information indicates that the SBFD symbol and a non-SBFD symbol are available for performing the multiple times of first channel transmissions, and the SBFD symbol or the non-SBFD symbol is available for performing the any one of the multiple times of first channel transmissions;
in a case where the first information field is set to the fifth value and the second information field is set to a seventh value, the first information indicates that the SBFD symbol and a non-SBFD symbol are available for performing the multiple times of first channel transmissions, and the SBFD symbol and the non-SBFD symbol are available for performing the any one of the multiple times of first channel transmissions;
in a case where the first information field is set to an eighth value and the second information field is empty or has a value, the first information indicates that the SBFD symbol is available for performing the multiple times of first channel transmissions, and the SBFD symbol is available for performing the any one of the multiple times of first channel transmissions; or
in a case where the first information field is set to a ninth value and the second information field is empty or has a value, the first information indicates that the non-SBFD symbol is available for performing the multiple times of first channel transmissions, and the non-SBFD symbol is available for performing the any one of the multiple times of first channel transmissions.

In some embodiments, the first information includes a third information field;
in a case where the third information field is set to a first value, the first information indicates that the SBFD symbol and a non-SBFD symbol are available for performing the multiple first channel transmissions, and the SBFD symbol or the non-SBFD symbol is available for performing the any one of the multiple times of first channel transmissions;
in a case where the third information field is set to a second value, the first information indicates that the SBFD symbol and a non-SBFD symbol are available for performing the multiple times of first channel transmissions, and the SBFD symbol and the non-SBFD symbol are available for performing the any one of the multiple times of first channel transmissions;
in a case where the third information field is set to a third value, the first information indicates that the SBFD symbol is available for performing the multiple times of first channel transmissions, and the SBFD symbol is available for performing the any one of the multiple times of first channel transmissions; and
in a case where a third information field is set to a fourth value, the first information indicates that the non-SBFD symbol is available for performing the multiple times of first channel transmissions, and the non-SBFD symbol is available for performing the any one of the multiple times of first channel transmissions.

In some embodiments, the SBFD symbol is a symbol including a DL subband and a UL subband in a frequency domain; and the non-SBFD symbol is a symbol not including a DL subband and a UL subband in a frequency domain.

FIG. 5A is a schematic diagram illustrating an interaction of an information indication method according to embodiments of the disclosure. As illustrated in FIG.5A, embodiments of the disclosure relates to an information indication method performed by a communication system 100. The method includes the following.

**In step S5101,** a network device sends first information to a terminal.

In some embodiments, the first information indicates at least one of:
a time unit category available for performing multiple times of first channel transmissions; or
a time unit category available for performing any one of multiple times of first channel transmissions.

For an optional implementation of step S5101, reference may be made to the optional implementation of step S2101 in FIG. 2A and to other related parts in embodiments related to FIG. 2A, which are not repeated here.

**In step S5102,** the terminal determines the time unit category.

For an optional implementation of step S5102, reference may be made to the optional implementation of step S2102 in FIG. 2A and to other related parts in embodiments related to FIG. 2A, which are not repeated here.

In some embodiments, the above method may include the methods in the above embodiments at the side of the communication system, the terminal, the network device, which are not repeated here.

FIG. 6A is a schematic diagram illustrating an interaction of an information indication method according to embodiments of the disclosure. As illustrated in FIG. 6A, embodiments of the disclosure relate to an information indication method. The method includes the following.

**In step S6101,** first information is received. The first information indicates symbol(s) available for performing multiple times of first channel transmissions and symbol(s) available for performing any one of the multiple times of first channel transmissions in a case where a DCI indicates the multiple times of first channel transmissions.

In some embodiments, the first channel transmission may be a PDSCH transmission or a PUSCH transmission.

It should be noted that embodiments of the disclosure are described by taking the PDSCH transmission as an example, but embodiments may also be adapted to the PUSCH transmission, which is not limited herein.

In some embodiments, the first information indicates symbol(s) available for performing the multiple times of PDSCH transmissions and symbol(s) available for performing any one of the multiple times of PDSCH transmissions in a case where a DCI indicates the multiple times of PDSCH transmissions.

In some embodiments, the multiple times of PDSCH transmissions may be performed in both an SBFD symbol and a non-SBFD symbol simultaneously, and a single PDSCH transmission may be performed only in the SBFD symbol or in the non-SBFD symbol.

In some embodiments, the multiple times of PDSCH transmissions may be performed in both the SBFD symbol and the non-SBFD symbol simultaneously, and a single PDSCH transmission may be performed in the SBFD symbol and the non-SBFD symbol.

In some embodiments, the multiple times of PDSCH transmissions may be performed only in the SBFD symbol, and a single PDSCH transmission may be performed only in the SBFD symbol.

In some embodiments, the multiple times of PDSCH transmissions may be performed only in the non-SBFD symbol, and a single PDSCH transmission may be performed only in the non-SBFD symbol.

**In step 6102,** a UE determines symbol(s) that is/are available for performing the multiple times of PDSCH transmissions and symbol(s) that is/are available for performing any PDSCH transmission.

In some embodiments, a DCI, an RRC, an MAC CE or an SIB1 includes information 1 or information 2. Each of the information 1 and the information 2 is a newly added field (or called additional field) or a redundant field. The information 1 corresponds to the content indicated by the first information field in the disclosure, and the information 2 corresponds to the content indicated by the second information field in the disclosure.

In some embodiments, in a case where the information 1 is set to a first value and the information 2 is empty, the multiple times of PDSCH transmissions may be performed in both the SBFD symbol and the non-SBFD symbol simultaneously, and a single PDSCH transmission may be performed only in the SBFD symbol or in the non-SBFD symbol.

In some embodiments, in a case where the information 1 is set to a second value and the information 2 is empty, the multiple times of PDSCH transmissions may be performed in both the SBFD symbol and the non-SBFD symbol simultaneously; and a single PDSCH transmission may be performed in both the SBFD symbol and the non-SBFD symbol.

In some embodiments, in a case where the information 1 is empty and the information 2 is set to a third value, the multiple times of PDSCH transmissions may be performed only in the SBFD symbol; and a single PDSCH transmission may be performed only in the SBFD symbol.

In some embodiments, in a case where the information 1 is empty and the information 2 is set to a fourth value, the multiple times of PDSCH transmissions may be performed only in the non-SBFD symbol; and a single PDSCH transmission may be performed only in the non-SBFD symbol.

For the above embodiments, reference may be made to Table 1.

In some embodiments, the DCI, the RRC, the MAC CE or the SIB1 includes the information 1, and the information 1 is a newly added field (or called additional field) or a redundant field.

In some embodiments, the information 1 indicates that the multiple times of PDSCH transmissions may be performed in both the SBFD symbol and the non-SBFD symbol simultaneously or may be performed only in the SBFD symbol or in the non-SBFD symbol; and indicates whether a single PDSCH transmission may be performed in both the SBFD symbol and the non-SBFD symbol simultaneously.

In some embodiments, in a case where the information 1 is set to the first value, the multiple times of PDSCH transmissions may be performed in both the SBFD symbol and the non-SBFD symbol simultaneously; and a single PDSCH transmission may be performed only in the SBFD symbol or in the non-SBFD symbol.

In some embodiments, in a case where the information 1 is set to the second value, the multiple times of PDSCH transmissions may be performed in both the SBFD symbol and the non-SBFD symbol simultaneously; and a single PDSCH transmission may be performed in both the SBFD symbol and the non-SBFD symbol simultaneously.

In some embodiments, in a case where the information 1 is set to the third value, the multiple times of PDSCH transmissions may be performed only in the SBFD symbol; and a single PDSCH transmission may be performed only in the SBFD symbol.

In some embodiments, in a case where the information 1 is set to the fourth value, the multiple times of PDSCH transmissions may be performed only in the non-SBFD symbol; and a single PDSCH transmission may be performed only in the non-SBFD symbol.

For the above embodiments, reference may be made to Table 3.

In some embodiments, the DCI, the RRC, the MAC CE, or the SIB1 include the information 1 and the information 2, and the information 1 and the information 2 may each be a newly added field (or called additional field) or a redundant field.

In some embodiments, the information 1 and the information 2 indicate that the multiple times of PDSCH transmissions may be performed in both the SBFD symbol and the non-SBFD symbol simultaneously or the multiple times of PDSCH transmissions may be performed only in the SBFD symbol or only in the non-SBFD symbol; and indicate whether a single PDSCH transmission may be performed in both the SBFD symbol and the non-SBFD symbol simultaneously.

In some embodiments, in a case where the information 1 is set to the first value and information 2 is set to the second value, the multiple times of PDSCH transmissions may be performed in both the SBFD symbol and the non-SBFD symbol simultaneously; and a single PDSCH transmission may be performed only in the SBFD symbol or in the non-SBFD symbol.

In some embodiments, in a case where the information 1 is set to the first value and information 2 is the third value, the multiple times of PDSCH transmissions may be performed in both the SBFD symbol and the non-SBFD symbol simultaneously; and a single PDSCH transmission may be performed in both the SBFD symbol and the non-SBFD symbol simultaneously.

In some embodiments, in a case where the information 1 is set to the fourth value, and information 2 is empty or is set to a value, the multiple times of PDSCH transmissions may be performed only in the SBFD symbol; and a single PDSCH transmission may be performed only in the SBFD symbol.

In some embodiments, in a case where the information 1 is set to the fifth value, and the information 2 is empty or is set to a value, the multiple times of PDSCH transmissions may be performed only in the non-SBFD symbol; and a single PDSCH transmission may be performed only in the non-SBFD symbol.

For the above embodiments, reference may be made to Table 2.

In embodiments of the disclosure, some or all of the steps and their optional implementations may be arbitrarily combined with some or all of the steps in other embodiments, and may also be arbitrarily combined with optional implementations in other embodiments.

Embodiments of the disclosure also provide apparatuses for implementing any of the above methods. In an example, an apparatus including units or modules for implementing the steps performed by the terminal in any of above methods. In another example, another apparatus is also provided, which includes units or modules for implementing the steps performed by the network device (such as an access network device, a core network function node, a core network device and the like) in any of above methods.

It should be understood that the division of each unit or module in the above apparatus is only a division of logical functions, which may be fully or partially integrated into a physical entity or physically separated in actual implementation. Moreover, the units or modules in the apparatus may be implemented in a form of calling software by a processor: for example, the apparatus includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the apparatus or a memory outside the apparatus. In some examples, the units or modules in the apparatus may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit. In another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 7A is a block diagram illustrating a terminal according to embodiments of the disclosure. As illustrated in FIG. 7A, a terminal 7100 may include at least one of a transceiver module 7101 or a processing module 7102. In some embodiments, the transceiver module is configured to receive first information. For example, the above transceiver module is configured to perform at least one of the communication steps such as sending and/or receiving (for example, but is not limited to, step S2101 and step S3101) performed by the terminal 101 in any of above methods, which is not repeated here. For example, the above processing module is configured to perform at least one of other steps (for example, but is not limited to, step S2102 and step 3102) performed by the terminal 101 in any of above methods, which is not repeated here.

FIG. 7B is a block diagram illustrating a network device according to embodiments of the disclosure. As illustrated in FIG. 7B, a network device 7200 may include at least one of a transceiver module 7201 or a processing module 7202. In some embodiments, the transceiver module is configured to send first information. For example, the above transceiver module is configured to perform at least one of the communication steps such as sending and/or receiving (for example, but is not limited to, step S2101 and step S3101) performed by the terminal 101 in any of above methods, which is not repeated here. In some embodiments, the transceiver module may include a sending module and/or a receiving module, which may be separate or integrated. For example, the transceiver module and the transceiver may be used interchangeably.

In some embodiments, the processing module may be one module or include multiple sub-modules. For example, the multiple sub-modules respectively perform all or part of the steps required by the processing module. For example, the processing module may be replaced with the processor.

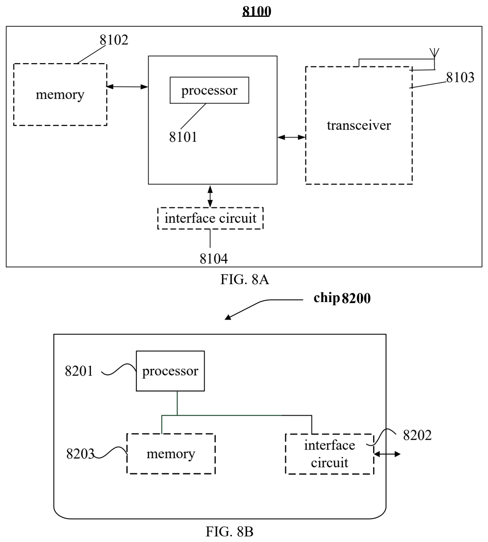

FIG. 8A is a block diagram illustrating a communication device 8100 according to embodiments of the disclosure. The communication device 8100 may be a network device (e.g., an access network device, a core network device, or the like), may be a terminal (e.g., a user equipment, or the like), may be a chip, chip system, or processor supporting the network device to implement any of above methods, or may be a chip, chip system, or processor supporting the terminal to implement any of above methods. The communication device 8100 may be configured to implement the methods according to the above method embodiments, for details, reference may be made to the description in the above method embodiments.

As illustrated in FIG. 8A, the communication device 8100 includes one or more processors 8101. The processor 8101 may be a general-purpose processor or a special-purpose processor, for example, a baseband processor or a central processing unit. The baseband processor may be configured to process communication protocols and communication data, and the central processor may be configured to control communication devices (such as a base station, a baseband chip, a terminal, a terminal chips, a DU, or a CU, or the like), execute programs, and process program data. The communication device 8100 is configured to perform any of above methods.

In some embodiments, the communication device 8100 further includes one or more memories 8102 for storing instructions. For example, all or part of the memory 8102 may be located outside the communication device 8100.

In some embodiments, the communication device 8100 further includes one or more transceivers 8103. In a case where the communication device 8100 includes one or more transceivers 8103, the transceiver 8103 performs at least one of the communication steps such as sending and/or receiving (for example, but is not limited to, step S2101 and step S3101) in the above methods, and the processor 8101 performs at least one of other steps (for example, but is not limited to, step S2102 and step 3102).

In some embodiments, the transceiver may include a receiver and/or a transmitter, which may be separate or integrated. For example, the terms such as transceiver, transceiver unit, transceiver machine, transceiver circuit, or the like may be used interchangeably, and the terms such as transmitter, transmitting unit, transmitting machine, transmitting circuit, or the like may be used interchangeably, and the terms such as receiver, receiving unit, receiving machine, receiving circuit, or the like may be used interchangeably.

In some embodiments, the communication device 8100 may include one or more interface circuits 8104. For example, the interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 according to above embodiments may be a network device or a terminal device, but the scope of the communication device 8100 according to the disclosure is not limited thereto. The structure of the communication device may not be limited by FIG. 8A. The communication device may be a stand-alone device or may be part of a larger device. For example, the communication device may be: (1) a stand-alone integrated circuit (IC), or a chip, or a chip system or subsystem; (2) a set of one or more ICs, in which for example, the set of ICs may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 8B is a block diagram illustrating a chip 8200 according to embodiments of the disclosure. In a case where the communication device 8100 may be a chip or a chip system, reference may be made to the block diagram of the chip 8200 illustrated in FIG. 8B, but the disclosure is not limited thereto.

The chip 8200 includes one or more processors 8201, and the chip 8200 is configured to perform any of above methods.

In some embodiments, the chip 8200 also includes one or more interface circuits 8202. For example, the interface circuit 8202 is connected to the memory 8203. The interface circuit 8202 may be configured to receive signals from the memory 8203 or other devices, and the interface circuit 8202 may be configured to send signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving (for example, but is not limited to, step S2101 and step S3101) in above methods, and the processor 8201 performs at least one of other steps (for example, but is not limited to, step S2102 and step 3102).

In some embodiments, the terms such as interface circuit, interface, transceiver pin, transceiver or the like may be used interchangeably.

In some embodiments, the chip 8200 further includes one or more memories 8203 for storing instructions. For example, all or part of the memory 8203 may be outside the chip 8200.

The disclosure further provides a storage medium on which instructions are stored, which, when executed on the communication device 8100, cause the communication device 8100 to perform any of above methods. For example, the storage medium is an electronic storage medium. For example, the storage medium is a computer-readable storage medium, but the disclosure is not limited thereto, and it may also be a storage medium readable by other devices. For example, the storage medium may be a non-transitory storage medium, but the disclosure is not limited thereto, and it may also be a temporary storage medium.

The disclosure further provides a program product which, when executed by the communication device 8100, causes the communication device 8100 to perform any of above methods. For example, the program product is a computer program product.

The disclosure further proposes a computer program that, when run on a computer, causes the computer to perform any of above methods.

## Claims

1. An information indication method, comprising:
receiving first information,
wherein the first information indicates at least one of:
a time unit category available for performing a plurality of times of first channel transmissions; or
a time unit category available for performing any one of a plurality of times of first channel transmissions.

2. The method of claim 1, wherein the first channel transmission is a physical downlink shared channel (PDSCH) transmission or a physical uplink shared channel (PUSCH) transmission.

3. The method of any one of claims 1 to 2, wherein the time unit category comprises at least one of: a first time unit category or a second time unit category, wherein the first time unit category is a category of a subband full duplex (SBFD) symbol, and the second time unit category is a category of a non-SBFD symbol.

4. The method of any one of claims 1 to 3, wherein the first information indicates one of:
that an SBFD symbol and a non-SBFD symbol are available for performing the plurality of times of first channel transmissions, and the SBFD symbol or the non-SBFD symbol is available for performing the any one of the plurality of times of first channel transmissions;
that an SBFD symbol and the non-SBFD symbol are available for performing the plurality of times of first channel transmissions, and the SBFD symbol and the non-SBFD symbol are available for performing the any one of the plurality of times of first channel transmissions;
that an SBFD symbol is available for performing the plurality of times of first channel transmissions, and the SBFD symbol is available for performing the any one of the plurality of times of first channel transmissions; or
that a non-SBFD symbol is available for performing the plurality of times of first channel transmissions, and the non-SBFD symbol is available for performing the any one of the plurality of times of first channel transmissions.

5. The method of any one of claims 1 to 4, wherein receiving the first information comprises:
receiving a first message,
wherein the first message comprises the first information, and the first message is one of:
a downlink control information (DCI) message;
a radio resource control (RRC) message;
a media access control (MAC) control element (CE) message; or
a system information block (SIB).

6. The method of any one of claims 1 to 5, wherein the first information comprises a first information field and a second information field, and the method further comprises:
in a case where the first information field is set to a first value and the second information field is empty, determining that an SBFD symbol and a non-SBFD symbol are available for performing the plurality of times of first channel transmissions, and the SBFD symbol or the non-SBFD symbol is available for performing the any one of the plurality of times of first channel transmissions;
in a case where the first information field is set to a second value and the second information field is empty, determining that an SBFD symbol and a non-SBFD symbol are available for performing the plurality of times of first channel transmissions, and the SBFD symbol and the non-SBFD symbol are available for performing the any one of the plurality of times of first channel transmissions;
in a case where the first information field is empty and the second information field is set to a third value, determining that an SBFD symbol is available for performing the plurality of times of first channel transmissions, and the SBFD symbol is available for performing the any one of the plurality of times of first channel transmissions;
in a case where the first information field is empty and the second information field is set to a fourth value, determining that a non-SBFD symbol is available for performing the plurality of times of first channel transmissions, and the non-SBFD symbol is available for performing the any one of the plurality of times of first channel transmissions;
in a case where the first information field is set to a fifth value and the second information field is set to a sixth value, determining that an SBFD symbol and a non-SBFD symbol are available for performing the plurality of times of first channel transmissions, and the SBFD symbol or the non-SBFD symbol is available for performing the any one of the plurality of times of first channel transmissions;
in a case where the first information field is set to the fifth value and the second information field is set to a seventh value, determining that an SBFD symbol and a non-SBFD symbol are available for performing the plurality of times of first channel transmissions, and the SBFD symbol and the non-SBFD symbol are available for performing the any one of the plurality of times of first channel transmissions;
in a case where the first information field is set to an eighth value and the second information field is empty or is set to a value, determining that an SBFD symbol is available for performing the plurality of times of first channel transmissions, and the SBFD symbol is available for performing the any one of the plurality of times of first channel transmissions; or
in a case where the first information field is set to a ninth value and the second information field is empty or is set to a value, determining that a non-SBFD symbol is available for performing the plurality of times of first channel transmissions, and the non-SBFD symbol is available for performing the any one of the plurality of times of first channel transmissions.

7. The method of any one of claims 1 to 5, wherein the first information comprises a third information field, and the method further comprises:
in a case where the third information field is set to a first value, determining that an SBFD symbol and a non-SBFD symbol are available for performing the plurality of times of first channel transmissions, and the SBFD symbol or the non-SBFD symbol is available for performing the any one of the plurality of times of first channel transmissions;
in a case where the third information field is set to a second value, determining that an SBFD symbol and the non-SBFD symbol are available for performing the plurality of times of first channel transmissions, and the SBFD symbol and the non-SBFD symbol are available for performing the any one of the plurality of times of first channel transmissions;
in a case where the third information field is set to a third value, determining that an SBFD symbol is available for performing the plurality of times of first channel transmissions, and the SBFD symbol is available for performing the any one of the plurality of times of first channel transmissions; or
in a case where a fourth information field is set to a fourth value, determining that a non-SBFD symbol is available for performing the plurality of times of first channel transmissions, and the non-SBFD symbol is available for performing the any one of the plurality of times of first channel transmissions.

8. The method of any one of claims 2 to 7, wherein an SBFD symbol is a symbol comprising a downlink (DL) subband and an uplink (UL) subband in a frequency domain; and a non-SBFD symbol is a symbol not comprising a DL subband and a UL subband in a frequency domain.

9. The method of claim 8, wherein the SBFD symbol comprises a guard band (GB) in the frequency domain.

10. The method of any one of claims 1 to 9, further comprising:
receiving second information,
wherein the second information is used for instructing a terminal to receive data in a plurality of time units.

11. An information indication method, comprising:
sending first information,
wherein the first information indicates at least one of:
a time unit category available for performing a plurality of times of first channel transmissions; or
a time unit category available for performing any one of a plurality of times of first channel transmissions.

12. The method of claim 11, wherein the first channel transmission is a physical downlink shared channel (PDSCH) transmission or a physical uplink shared channel (PUSCH) transmission.

13. The method of any one of claims 11 to 12, wherein the time unit category comprises at least one of: a first time unit category or a second time unit category, wherein the first time unit category is a category of a subband full duplex (SBFD) symbol, and the second time unit category is a category of a non-SBFD symbol.

14. The method of any one of claims 11 to 13, wherein the first information indicates one of:
that an SBFD symbol and a non-SBFD symbol are available for performing the plurality of times of first channel transmissions, and the SBFD symbol or the non-SBFD symbol is available for performing the any one of the plurality of times of first channel transmissions;
that an SBFD symbol and a non-SBFD symbol are available for performing the plurality of times of first channel transmissions, and the SBFD symbol and the non-SBFD symbol are available for performing the any one of the plurality of times of first channel transmissions;
that an SBFD symbol is available for performing the plurality of times of first channel transmissions, and the SBFD symbol is available for performing the any one of the plurality of times of first channel transmissions; or
that a non-SBFD symbol is available for performing the plurality of times of first channel transmissions, and the non-SBFD symbol is available for performing the any one of the plurality of times of first channel transmissions.

15. The method of any one of claims 11 to 14, wherein sending the first information comprises:
sending a first message,
wherein the first message comprises the first information, and the first message is one of:
a downlink control information (DCI) message;
a radio resource control (RRC) message;
a media access control (MAC) control element (CE) message; or
a system information block (SIB).

16. The method of any one of claims 11 to 15, wherein the first information comprises a first information field and a second information field;
in a case where the first information field is set to a first value and the second information field is empty, the first information indicates that an SBFD symbol and a non-SBFD symbol are available for performing the plurality of times of first channel transmissions, and the SBFD symbol or the non-SBFD symbol is available for performing the any one of the plurality of times of first channel transmissions;
in a case where the first information field is set to a second value and the second information field is empty, the first information indicates that an SBFD symbol and a non-SBFD symbol are available for performing the plurality of times of first channel transmissions, and the SBFD symbol and the non-SBFD symbol are available for performing the any one of the plurality of times of first channel transmissions;
in a case where the first information field is empty and the second information field is set to a third value, the first information indicates that an SBFD symbol is available for performing the plurality of times of first channel transmissions, and the SBFD symbol is available for performing the any one of the plurality of times of first channel transmissions;
in a case where the first information field is empty and the second information field is set to a fourth value, the first information indicates that a non-SBFD symbol is available for performing the plurality of times of first channel transmissions, and the non-SBFD symbol is available for performing the any one of the plurality of times of first channel transmissions;
in a case where the first information field is set to a fifth value and the second information field is set to a sixth value, the first information indicates that an SBFD and a non-SBFD symbol are available for performing the plurality of times of first channel transmissions, and the SBFD symbol or the non-SBFD symbol is available for performing the any one of the plurality of times of first channel transmissions;
in a case where the first information field is set to the fifth value and the second information field is set to a seventh value, the first information indicates that an SBFD symbol and a non-SBFD symbol are available for performing the plurality of times of first channel transmissions, and the SBFD symbol and the non-SBFD symbol are available for performing the any one of the plurality of times of first channel transmissions;
in a case where the first information field is set to an eighth value and the second information field is empty or has a value, the first information indicates that an SBFD symbol is available for performing the plurality of times of first channel transmissions, and the SBFD symbol is available for performing the any one of the plurality of times of first channel transmissions; and
in a case where the first information field is set to a ninth value and the second information field is empty or has a value, the first information indicates that a non-SBFD symbol is available for performing the plurality of times of first channel transmissions, and the non-SBFD symbol is available for performing the any one of the plurality of times of first channel transmissions.

17. The method of any one of claims 11 to 15, wherein the first information comprises a third information field;
in a case where the third information field is set to a first value, the first information indicates that an SBFD symbol and a non-SBFD symbol are available for performing the plurality of first channel transmissions, and the SBFD symbol or the non-SBFD symbol is available for performing the any one of the plurality of times of first channel transmissions;
in a case where the third information field is set to a second value, the first information indicates that an SBFD symbol and a non-SBFD symbol are available for performing the plurality of times of first channel transmissions, and the SBFD symbol and the non-SBFD symbol are available for performing the any one of the plurality of times of first channel transmissions;
in a case where the third information field is set to a third value, the first information indicates that an SBFD symbol is available for performing the plurality of times of first channel transmissions, and the SBFD symbol is available for performing the any one of the plurality of times of first channel transmissions; and
in a case where a fourth information field is set to a fourth value, the first information indicates that a non-SBFD symbol is available for performing the plurality of times of first channel transmissions, and the non-SBFD symbol is available for performing the any one of the plurality of times of first channel transmissions.

18. The method of any one of claims 11 to 17, wherein an SBFD symbol is a symbol comprising a downlink (DL) subband and an uplink (UL) subband in a frequency domain; and a non-SBFD symbol is a symbol not comprising a DL subband and a UL subband in a frequency domain.

19. The method of claim 18, wherein the SBFD symbol comprises a guard band (GB) in the frequency domain.

20. The method of any one of claims 12 to 19, further comprising:
receiving second information,
wherein the second information is used for instructing a terminal to receive data in a plurality of time units.

21. A terminal, comprising:
a transceiver module, configured to receive first information,
wherein the first information indicates at least one of:
a time unit category available for performing a plurality of times of first channel transmissions; or
a time unit category available for performing any one of a plurality of times of first channel transmissions.

22. A network device, comprising:
a transceiver module, configured to send first information,
wherein the first information indicates at least one of:
a time unit category available for performing a plurality of times of first channel transmissions; or
a time unit category available for performing any one of a plurality of times of first channel transmissions.

23. An information indication method, comprising:
sending, by a network device, first information to a terminal,
wherein the first information indicates at least one of:
a time unit category available for performing a plurality of times of first channel transmissions; or
a time unit category available for performing any one of the plurality of times of first channel transmissions.

24. A communication system, comprising:
a terminal, configured to implement the information indication method of any one of claims 1 to 10; and
a network device, configured to implement the information indication method of any one of claims 11 to 20.

25. A terminal, comprising:
one or more processors,
wherein the one or more processors are configured to perform the information indication method of any one of claims 1 to 10.

26. A network device, comprising:
one or more processors,
wherein the one or more processors are configured to perform the information indication method of any one of claims 11 to 20.

27. A storage medium having stored therein instructions that, when executed on a communication device, cause the communication device to perform the method of any one of claims 1 to 10 and claims 11 to 20.
